# EUROPEAN PATENT APPLICATION

(11) **EP 4 194 418 A1**
(43) Date of publication of application: **14.06.2023**
(21) Application number: 21020634.8
(22) Date of filing: 10.12.2021
(51) Int. Cl.: C04B 18/02, C04B 20/00

(54) **FILLER FOR BUILDING MIXTURES AND PRODUCTS AND METHOD OF A PRODUCTION OF SUCH FILLER**

(71) Applicant: KAZAK s.r.o., 085 01 Bardejov (SK)
(72) Inventor: Faltus, Milos, 160 00 Praha 6 (CZ); Proksan, Zbynek, 150 00 Praha 5 (CZ)
(74) Representative: Pavlica, Tomas

(57) **Abstract**

A filler for building compositions and building products comprises grains of at least one thermoplastic, shaped into the form of fractals of branch and/or stem nature, and/or combinations thereof, wherein, the size of the fractals of the branch and/or the stem nature in one dimension at most 15 mm. According to the method of production of a filler for building compositions and building products, grains of at least one thermoplastic with an input size of up to 35 mm are mixed with air in an amount in the range from 0.1 m³ to 1.5 m³ per 1 kg of the treated grains, the grains are than subjected to at least two successive collisions with a working body moving at a speed of at least 80 m.s⁻¹ for their heating and partial melting and simultaneously the grains are brought into turbulent flow for their disconnection and formation of grains into the shape of fractals of the branch and/or stem-shape.

## Description

### Field of the Invention

This technical solution relates to filler for building compositions, includinh building products, which filler is produced in particular on the basis of thermoplastics. Advantageously, it may also comprise cellulosic and lignocellulosic substances.

### Background of the Invention

At present, in addition to aggregates, sands, ashes, recycled concretes, dedusted particles and the like, wires (wire-concrete), plastic or glass fibres, which are produced for this purpose, fibres of certain lignocellulosic materials and the like are used as fillers for building compositions. Experiments with the use of waste plastics are still in their starting time, and their greater implementation is hindered by the fact that they are available mainly as relatively large coloured particles, which disturb the surface structure of such building products visually. Processing of these waste plastics is carried out almost exclusively in some slow-running crushing equipment (e.g. in toothed crushers), and this without any presence of other additives. So, only crushed, partially fiberized structures (particles) of plastics come to existence. In some cases they are mixed with remnants of the paper labels. During this grinding, there is usually no appreciable increase in the material temperature. Also, none or only minimal roughening of the particle surface takes place. Therefore, as a result of the current treatments, no melting or defibering takes place in the particles of the treated materials.

### Summary of the Invention

The above-mentioned drawbacks are eliminated by a filler for building compositions and building products according to this invention, the essence of which is that this filler comprises grains of at least one thermoplastic, which grains are treated by heating them up to an appropriate temperature to form fractal shapes of the branch and/or the trunk nature, wherein, for the purposes of this invention, such grains are called grains of fractal nature, wherein, the size of such grains in the form of fractals of the branch and/or the trunk nature is no more than 15 mm in one dimension.

For the purposes of this application, a fractal is meant to be an object of some irregular geometric shape, which is divisible into individual parts, wherein, each of such parts is, in ideal case, a diminished copy of the whole, so that such parts are essentially sets of parts, wherein, their geometric motive is replicated in the basic body. This phenomenon is called self-similarity. Thus, ideally, a fractal is self-similar, and if it can be divided into arbitrarily small parts, these small parts are essentially small replicas of the original set. The filler according to this invention comprises grains of the fractal nature, which grains are fractals of the branch or the trunk types, and their morphology comprises in particular spatial structures and planar spatial structures, in this case branches of protrusions of individual grains of the fractal shape in several different scales, wherein, their basic morphological characteristics are repeated to some extent in every such scale. The grains of the fractal nature, hereinafter also called simply only fractals, are, according to this invention, grains of large surface area values, if compared to conventional smooth unbranched grains. The grains of fractal nature according to this invention may exhibit the nature of independent stochastic, self-similar "branch" or "stem" fractals, or of their asymmetric aggregates. The grains of fractal nature according to this invention, made of thermoplastic substances, most often may have the nature of independent spaced stem and branch, asymmetric, scholastic, self-similar fractals with the fractal dimension (the so-called Hausdorf's dimension) in the range from 2.3 to 2.7. Some, very richly branched fractals, or their aggregates, then exhibit dimensions mostly from 2.4 to 2.85. Fractals having the nature of planar fractals with a dimension even less than 2, usually 1.6 - 1.82, can also occur, but much less frequently. Such fractals are formed by some soft plastics, such as by the low density polyethylene (LDPE) and by other similar plastics, especially those from which plastic films are made. However, since they are very often variously bent and twisted, their shape is considered to be three dimensional for the purposes of the present invention, their Hausdorf's fractal dimension is mostly at the level of the values from 2.3 to 2.5. Thus, the fractals of planar nature may also be present in the filler according to this invention, but usually, they are present only in some negligible amount. A person skilled in the art will certainly appreciate that the aggregates of such grains exhibit some spatial nature and exhibit values of this dimension in the range from 2.5 to 2.7.

Thus, for the purposes of this application, as grains of the fractal nature are considered to be those whose Hausdorf's fractal dimension is from 1.4 to 1.85, but in particular those whose Hausdorf's fractal dimension is from 2.3 to 2.85. For simplification, the grains of the fractal nature, or in short the fractals, for the purposes of this application, are consider to be also their clusters, which clusters are formed by clustering of the partially molten individual fractals before they have cooled down.

Filler according to this invention for building compositions is defined by the features set out in claim 1. The preferred embodiments of the filler are then defined by the features specified in the dependent claims. According the second aspect of the invention, a method of production of this filler is defined in claim 8, and the preferred embodiments of the method are then specified in the dependent method claims. The filler according to the invention comprises from 15% of its weight to 100% of its weight as grains of the fractal nature, they are of at least one thermoplastic, and the possible remnant of the filler weight up to 100% comprises grains of cellulosic substances and/or lignocellulosic substances, and optionally also other substances, such as crystalline, or amorphous inorganic substances from the group of carbonates, silicates, aluminosilicates, oxides, phosphates, sulphates, and mixtures thereof, and optionally also other substances, which are listed further below. Because the lignocellulosic materials alone are not able, with certain exceptions, such as the flax, hemp, or coconut fibres, to provide the building elements with sufficiently high tensile bending strength, according to the invention, in this preferred embodiment of the filler, at least one thermoplastic is added to the fractals, whereby, the advantages described further below are achieved.

According to one preferred embodiment, the filler comprises 100% by weight of a thermoplastic. According to an even more preferred embodiment, the filler comprises a composition of fractals of different thermoplastics, e.g. of polyethylene, low density polyethylene, high density polyethylene, polytetrafluoroethylene, polystyrene, acrylonitrile-butadiene-styrene, hereinafter referred to only as ABS, and of others, as it will be specified further below. According to another preferred embodiment, the filler comprises a composition of fractals of at least one thermoplastic, and of fractals of cellulose and/or lignocellulose, wherein, particularly advantageously, it can comprise also some of the substances listed further below. However, the filler according to the invention has to comprise at least 15% by weight of fractals of thermoplastic materials, whereby, functionality of the filler in terms of increasing the tensile bending strength of the resulting material to which this filler is added, is guaranteed. As already mentioned, the filler according to some preferred embodiments of this invention may comprise, in addition to said fractals of at least one thermoplastic, also fractals of cellulosic and lignocellulosic substances. According to another particularly preferred embodiment, the filler according to the invention further comprises at least 15% by weight of cellulosic and/or lignocellulosic fractal grains, wherein, this content is having a significant effect on the hydration quality of the binder during formation of the building elements.

According to a particularly preferred embodiment of the filler according to the invention, the filler comprises at least one of the following inorganic substances which substance is, or which substances are incorporated into the surface of the fractals. The term surface, into which said at least one inorganic substance is incorporated for the purposes of this application, also includes cracks in the surface, in which cracks the grains of such inorganic substance are adhered to the surface, or the surface of the branching of the fractals, in which fractals are adhered such grains. Due to presence of the tightly bound grains of the respective, above-mentioned inorganic substances in the surface of fractal grains of the thermoplastics (and possibly of the lignocellulosic substances), i.e. including the grains of these substances, which are adhered in the cracks of the surface of the fractals, or in the surface of the branching of the fractals, on the one hand, the electrostatic agglomeration of the grains of the fractal nature is largely eliminated, and on the other hand, the hydrophobicity of the majority of the thermoplastic grains of the fractal nature is largely eliminated. In carrying out the method according to the invention, which method will by described further below, particularly preferably, an inorganic substance with a grain size of up to 15 mm from the group comprising hydraulic substances, latent hydraulic substances, oxides, hydroxides and sulphates of Ca, and Fe and water-insoluble silicates, aluminosilicates, phosphates, carbonates is added, or more of them are added during the mechanical treatment of the thermoplastics, cellulosic or lignocellulosic substances. As a result, the fillers according to the invention are dissociated and heated, whereby, fine grains with a relatively ragged surface come into existence, but mostly the grains are several times smaller, even an order smaller, and they are also more isometric than as it is in the case of thermoplastics, or, if present, of cellulosic and/or lignocellulosic substances. If the inorganic substance is added in a powder form, and this even in grain sizes below 0.1 mm, its grains disintegrate only to a lesser extent during mechanical impulses, however, the environment, in which the mechanical treatment takes place, gets concentrated, and the balance of surface charges of the grains of the treated material is changed. This results in a more intense heating of these grains. If during dynamic compression of the composition of the so heated grains, treated in a heated air environment, also a turbulent flow occurs, then the individual grains stick, seal and jam together, in particular the fine grains of inorganic substances get into the surface of fractals of organic substances, including into the already mentioned cracks in the surface of said fractals, or in the surface of the fractal branching. Due to the substances that are firmly bound to the surface of the fractals, which substances react chemically in a humid environment and become a part of the binder, the bond between the resulting filler fractals is stronger. Additionally, the same applies what applied to the previous point, what is that agglomeration of the fractal grains is eliminated, and in the case of the inorganic substances with a negative surface charge, the hydrophobicity of the thermoplastic grains of the fractal nature is eliminated. On the contrary, in case of use of the inorganic substances with a positive surface charge, such as in case of limestone or talc, partial hydrophobization of the grains of the cellulosic and lignocellulosic substances can also occur. According to another particularly preferred embodiment, the filler comprises grains or particles of aluminium. When in contact with water in a high pH environment, such as is the one in concretes, the aluminium, when present in the filler, reacts with water to form aluminium hydroxide and hydrogen, which hydrogen forms bubbles in the concrete. The aluminium hydroxide can then react with Ca to form calcium aluminate and become a part of the binder. Usually, the foamed concretes have a very low tensile bending strength, what greatly improves the use of the filler according to this embodiment.

An advantage of the filler according to this invention is that after it has been mixed with a binder, and possibly with other components of the filler, for example with some aggregate, it is able to form a spatial structure, which structure is mechanically interconnected due to the rugged surface of fractal nature grains, and it is able to provide the building elements with increased tensile bending strength values without increasing their density or electrical conductivity. The filler according to the invention acts as a very light and effective reinforcement. Another advantage of the filler according to the invention, especially if it preferably comprises the grains of lignocellulosic and cellulosic substances, is that it significantly improves the hydration quality of hydraulic binders in the building materials, as it contributes to even distribution and retention of water in these materials. Therefore, the filler according to the invention improves the hydration quality of the hydraulic binders, what largely eliminates the occurrence of cracks in the building products. Due to these properties, the filler according to the invention is suitable, for example, for various thin-walled building elements, or as filler in compositions for 3D printing of buildings.

According to the second aspect of the invention, there is provided a method of producing a filler according to this invention, in which method the grains of thermoplastics, and optionally of other substances present, are disassembled by mechanical treatment using mechanical pulses, as it is described in the examples, whereby the thermoplastics are heated up, partially melted and defibered, in case of the cellulosic and/or the lignocellulosic substances, if they are present in the filler, said substances will be mechanically defibered. Both in the case of the thermoplastics and in case of the cellulosic and lignocellulosic materials, their grains exhibit a fractal nature. In carrying out the method according to the invention, due to the turbulent flow the air medium, in which the treatment takes place, it is compressed, whereby, the efficiency of fractal formation is increased. Due to the partial melting of the thermoplastic grains, the fractals of thermoplastics join, i.e. integrate with the fractals of the cellulosic and/or lignocellulosic components of the treated material, if they are also present. If also other suitable substances are present, as it will be described further below, which have a sufficiently small particle diameter, they will be fused into the surface of the fractals. For example, in carrying out a preferred embodiment of the method of producing the filler according the present invention, the addition of inorganic substances, such as cement, clinker, quarry dusts, limestone, silica sand, etc., allows to vary the surface charges of the fractal filler according to the type of the inorganic substance, or of their combinations, and so limit the agglomeration of the individual grains of the fractal binder effectively, and significantly improve the storability and transportability of the filler according to the invention. In the preferred embodiment of the method of production of the filler according to the invention, particularly preferably, the so called active filler, such as the already mentioned aluminium, is added, which active filler makes possible to modify nature of the final product produced from the filler.

### Brief Description of the Drawings

The invention in its various aspects will now be described with reference to certain drawings thereof, in which:
Fig. 1 shows an image of a typical fractal of the stem nature;
Fig. 2 shows a simplified drawing of a fractal of stem nature;
Fig. 3 shows an image of a fractal of the branch nature;
Fig. 4 shows a simplified drawing of a possible example of a fractal of the branch nature;
Fig. 5 shows a simplified drawing of another possible example of a fractal of the branch nature;
Fig. 6 shows an image of a polypropylene fractal of the stem nature;
Fig. 7 shows polytetrafluoroethylene fractals of the branch nature; and
Fig. 8 shows polyethylene fractals with grains of the Dolomitic limestone, integrated into the surface.

### Examples of Embodiments of the Invention

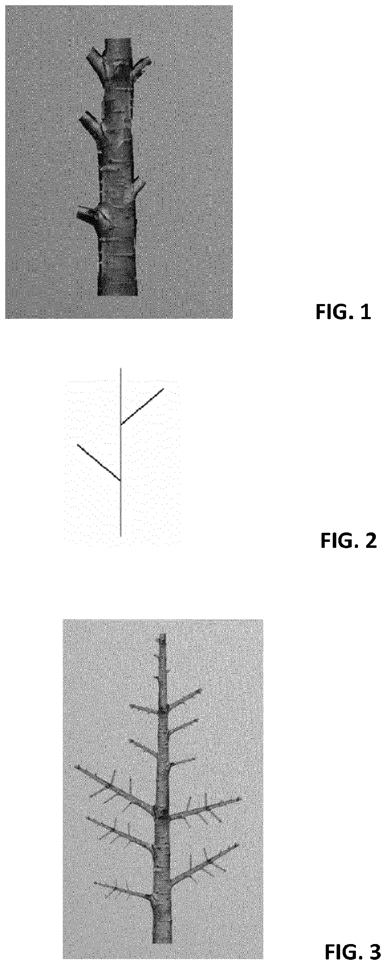

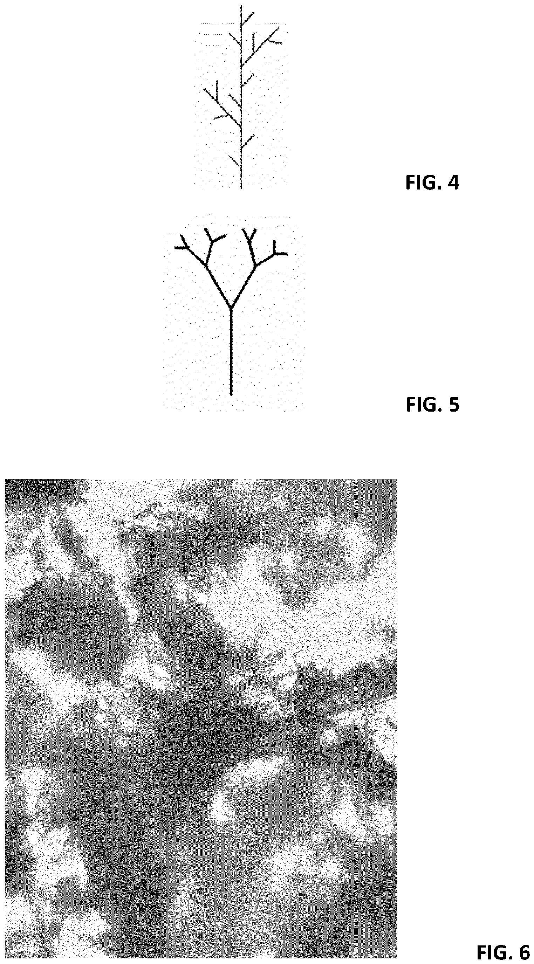

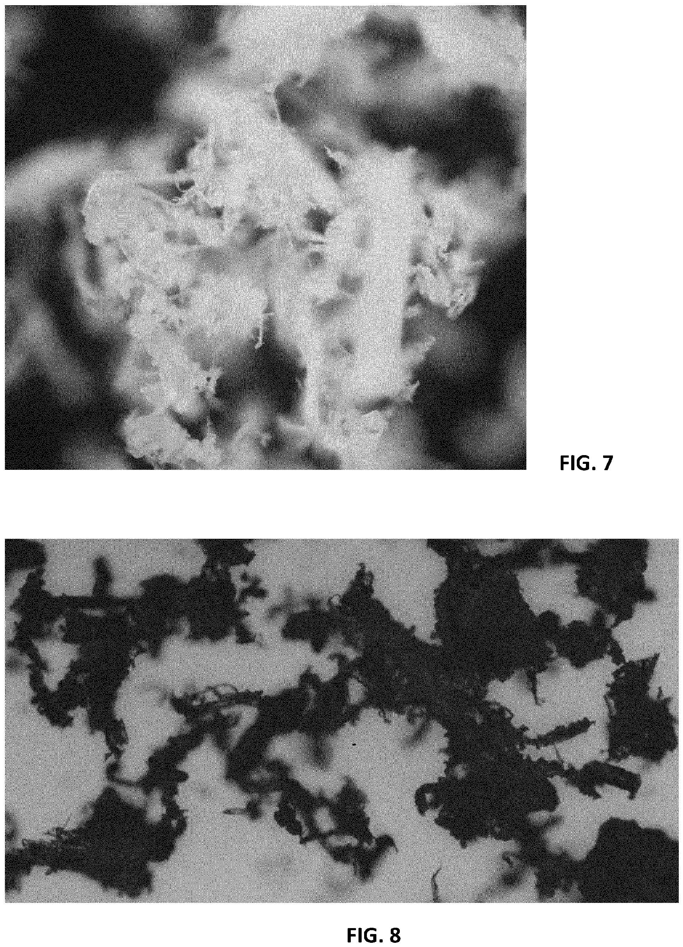

The invention will be described by the way of examples of its embodiments. A person skilled in the art will certainly appreciate that in describing some exemplary embodiments of the invention, various features of the invention are sometimes present in only a particular embodiment for the purposes of a more effective description. However, unless it is excluded because of the nature of their function, such features may be used also in other embodiments, wherein, such combinations of features of various embodiments are intended to fall within the scope of the invention, and any such combination represents another embodiment, what will be fully appreciable by those skilled in the art. The claims that follow after the detailed description are thereby expressly included as a part of this detailed description, wherein each claim represents independently a particular embodiment of the invention. Filler according to the invention exhibits the shape of the fractals of the stem, or the branch nature. To understand what is meant by such fractals, Fig. 1 shows an example of a typical fractal of the stem nature, Fig. 2 shows a simplified drawing of a fractal of the stem nature, Fig. 3 shows an example of a possible fractal of the branch nature, while Fig. 4 shows a simplified drawing of a possible example of a fractal of the branch nature, Fig. 5 shows a simplified drawing of another possible example of a fractal of the branch nature. Fig. 6 shows an image of grains of a filler of the fractal nature according to the invention made of polypropylene, which grains are of the stem nature, Fig. 7 shows grains of the fractal nature made of polytetrafluoroethylene, which fractals are of the branch nature, and Fig. 8 shows grains of the fractal nature made of polyethylene, with grains of the Dolomitic limestone integrated into the surface.

### Example 1

A filler according to the invention for the building compositions and the building products comprising grains of a thermoplastic only, which thermoplastic is a high density polyethylene (HDPE), which grains are shaped as spatial asymmetric fractals of the branch and stem nature, having the Hausdorf's fractal dimension in the range of about 2.4 - 2.75 and the longest dimension in one direction not more than 15 mm.

### Example 2

A filler for building compositions and building products, comprising a composition of thermoplastics, comprises 25% by weight of polyethylene (PE ) grains, 35% by weight of polytetrafluoroethylene (PTFE) grains, 15% by weight of polypropylene (PP) grains, 15% by weight of high density polyethylene (HDPE) grains, and 10% by weight of polystyrene (PS) grains. The grains are modified to the shape of the spatial branch and stem fractals, wherein, the values of the Hausdorf's fractal dimension are in the range of about 2.4 - 2.75, and the longest dimension in one direction is no more than 15 mm, wherein, the HDPE grains form mostly branch fractals with the Hausdorf's fractal dimension values in the range of 2.5 - 2.7, LDPE grains form spatial stem fractals with the Hausdorf's fractal dimension values mostly in the range 2.4 - 2.5, the PS grains form mainly spatial stem fractals with the Hausdorf's fractal dimension values of 2.4 - 2.55, and the PTFE grains form mainly the spatial branch fractals with the Hausdorf's fractal dimension values in the range of 2.5 - 2.75.

### Example 3

The filler for the building compositions and the building products, comprising 80% by weight of grains and grain aggregates of the recycled paper and the paperboard, which is modified into the shape of the spatial branch fractals with the longest dimension in one direction 12 mm and with the Hausdorf's fractal dimension values in the range of about 2.6 - 2.8, and 20% by weight of thermoplastic grains, which thermoplastic grains are the polytetrafluoroethylene grains modified into the shape of the spatial, asymmetrical, self-similar branch and stem fractals having the Hausdorf's fractal dimension values in the range of about 2.4 - 2.75 and the longest dimension in one direction of at most 15 mm.

### Example 4

Filler for building compositions and building products, comprising 80% by weight of PTFE grains shaped into spatial, branch and stem, asymmetrical, self-similar fractals with the Hausdorf's fractal dimension values in the range of approx. 2.4 - 2.7 and the longest dimension in one direction of not more than 15 mm, and from 20% by weight of grains and aggregates of wood sawdust modified into the shape of spatial branch fractals with the longest dimension in one direction 6 mm and the Hausdorf's fractal dimension values in the range of approx. 2.5 - 2.76.

### Example 5

Filler for building compositions and building products, comprising 50% by weight of grains and grain aggregates of recycled cardboard modified into the shape of the spatial branch fractals with the longest dimension in one direction 12 mm and the Hausdorf's fractal dimension values in the range of about 2.6 - 2.8, 30% by weight of cereal straw grains arranged into the shape of planar and spatial branch fractals with the longest dimension in one direction 15 mm and the Hausdorf's fractal dimension values in the range of approx. 2.4 - 2.6, and 20% by weight of wooden sawdust modified to the shape of spatial branch fractals with the longest dimension in one direction 6 mm and the Hausdorf's fractal dimension values in the range of approx. 2.5 - 2.76.

### Example 6

Filler for building compositions and building products, comprising 15% by weight of PE grains modified into the shape of spatial, branch and stem, asymmetrical, self-similar fractals with the Hausdorf's fractal dimension values in the range of approx. 2.4 - 2.75, and the longest dimension in one direction at most 15 mm, and the 85% by weight of grains and grain aggregates of recycled paper and paperboard modified into the shape of three-dimensional branch fractals with the longest dimension in one direction 12 mm and the Hausdorf's fractal dimension values in the range of about 2.6 - 2.8.

### Example 7

Filler for building compositions and building products, comprising 85% by weight of PET grains obtained from recycled plastic bottles, modified into the shape of spatial branch and stem, asymmetrical, self-similar fractals with the Hausdorf's fractal dimension values in the range of about 2.4 - 2.65 and the longest dimension in one direction not more than 15 mm, and 15% by weight of grains and aggregates of grains of recycled paper and paperboard modified into the shape of spatial branch fractals with the Hausdorf's fractal dimension values in the range of about 2.5 - 2.8 with the longest dimension in one direction not more than 12 mm.

### Example 8

Filler for building compositions and building products comprising 40% by weight of PTFE grains prepared in the form of planar and spatial branch and stem, asymmetrical, self-similar fractals with the Hausdorf s fractal dimension values in the range of about 2.4 - 2.65 and the longest dimension in one direction of not more than 15 mm and 60% by weight of grains and aggregates of recycled paper and paperboard grains modified to the shape of spacial branch fractals with the Hausdorf's fractal dimension values in the range of about 2.5 - 2.8 with the longest dimension in one direction not more than 5 mm, wherein this composition of fractal grain sis suitable as a part of the reinforcement of concrete and geopolymer building elements, including the building elements and structures produced by the linear 3D printing.

### Example 9

The filler for building compositions and building products consists of 35% by weight of polypropylene grains adjusted to the shape of spatial, in particular stem and branch, asymmetrical, self-similar fractals with the Hausdorf's fractal dimension values in the range of approx. 2.4 - 2.65 and the longest dimension in one direction at most 15mm, 40% by weight of soft PE obtained from recycled PE foils, modified into the shape of spatial, in particular branch, asymmetrical, self-similar fractals with the Hausdorf's fractal dimension values in the range of about 2,455 - 2.7 and the longest dimension in one direction at most 12mm and 25% by weight of dolomitic crystalline limestone with a size of up to 150 µm, which are baked into the surface, cracks and branches of the fractal PP and PE grains.

### Example 10

The filler for building compositions and building products comprising 35% by weight of polypropylene grains modified to the shape of spatial, in particular stem and branch, asymmetrical, self-similar fractals with the Hausdorf's fractal dimension values in the range of approx. 2.4 - 2.65, and the longest dimension in one direction at most 15mm, 40% by weight of soft PE obtained from recycled polyethylene foils, modified into the shape of spatial in particular branch, asymmetrical, self-similar fractals with the Hausdorf's fractal dimension values in the range of about 2.55 to 2.7 and the longest dimension in one direction at most 12mm and 25% by weight of dolomitic crystalline limestone grains of size up to 150 µm, which are baked into the surface of the fractal PP and PE grains.

### Example 11

The filler for building compositions and building products comprising 20% by weight of polypropylene grains adjusted to the shape of spatial, in particular stem and branch, asymmetric fractals with the Hausdorf's fractal dimension values in the range of approx. 2.4 - 2.65 and the longest dimension in one direction at most 15 mm, 45% by weight of soft polyethylene obtained from recycled polyethylene films, modified into the shape of spatial, especially branch, asymmetrical, self-similar fractals with the Hausdorf's fractal dimension values in the range of about 2.55 - 2.7 and the longest dimension in one direction at most 12 mm, and 25% by weight of dust grains from the crushing of granulite aggregates comprising feldspar, quartz, biotite, almandine garnet and kyanite, with size up to 80 µm, which are baked into the surface of the fractal polypropylene and polyethylene grains.

### Example 12

The active filler for building compositions and building products consists of 35% by weight of polytetrafluoroethylene grains prepared in the shape of spatial in particular stem and branch, asymmetrical, self-similar fractals with the Hausdorf's fractal dimension values in the range of about 2.45 - 2.7 and the longest dimension in one direction at most 15 mm, 40% by weight of soft polyethylene obtained from recycled polyethylene films, modified into the shape of spatial in particular branch, asymmetrical, self-similar fractals with the Hausdorf's fractal dimension values in the range of about 2.45 - 2.7 and the longest dimension in one direction at most 12 mm, and 25% by weight of Portland pozzolanic cement grains of size 50 µm, which are baked into the surface of the polytetrafluoroethylene and polyethylene fractal grains.

### Example 13

The active filler for building compositions and building products comprising 20% by weight of polytetrafluoroethylene (PTFE) grains modified into the shape of spatial, in particular stem and branch, asymmetrical, self-similar fractals with the Hausdorf's fractal dimension values in the range of about 2.45 - 2.7 and the longest dimension in one direction at most 15 mm, 30% by weight of soft polyethylene obtained from recycled polyethylene (PE) foils, modified into the shape of spatial, in particular branch, asymmetrical, self-similar fractals with the Hausdorf's fractal dimension values in the range of about 2.45 to 2.7 and the longest dimension in one direction at most 12mm, 25% by weight of grains and aggregates of recycled paper and paperboard grains, modified to the shape of spatial branch fractals with the longest dimension in one direction 12 mm and the Hausdorf's fractal dimension values in the range of about 2.6 - 2.8, 10% by weight of the Portland pozzolanic cement of size up to 50 µm, which are also baked into the surface of the fractal polytetrafluoroethylene and polyethylene grains and from 15% by weight of the brown coal fluidized bed ash grains of up to 50 µm size, which are also baked into the surface of the PTFE and PE fractal grains.

### Example 14

The active fillers for the gas-concrete building products comprising 35% by weight of polytetrafluoroethylene (PTFE) grains modified to the shape of spatial, in particular stem and branch, asymmetrical, self-similar fractals, with the Hausdorf's fractal dimension values in the range of approx. 2.45 - 2.7 and the longest dimension in one direction at most 15mm, 40% by weight of soft polyethylene (PE) obtained from recycled polyethylene films, modified into the shape of spatial in particular branch, asymmetrical, self-similar fractals with the Hausdorfs fractal dimension values in the range of about 2.45 to 2.7 and the longest dimension in one direction at most 12mm, and 24,75% by weight of the Portland pozzolanic cement grains of up to 50 µm in size, which are baked into the surface of the PTFE and PE fractal grains, and 0.25% by weight of aluminium grains of up to 50 µm in size, adhering to the surface of the polytetrafluoroethylene fractal grains.

### Example 15

Active filler for the gas-concrete building products, comprising grains of the treated municipal waste of the SRF/RDF nature, which filler contains 58% by weight of grains of various thermoplastic materials modified into the shape of spatial, in particular stem and branch, asymmetric, self-similar fractals with the Hausdorf's fractal dimension values in the range of about 2.45 - 2.7 and the longest dimension in one direction at most 15 mm, 25% by weight of cellulosic materials modified into the shape of spatial, in particular branch, asymmetrical, self-similar fractals with the Hausdorf's fractal dimension values in the range of about 2.55 to 2.8 and the longest dimension in one direction at most 10mm, from 16.7% by weight of glass grains and ceramic grains of the size up to 300µm and from aluminium grains of the size up to 300 µm.

### Example 16

100% by weight of high-density polyethylene (HDPE) thermoplastic in the form of chips with an input grain size of up to 35 mm together with air in an amount of 0.12 m³/1 kg of the input raw material is fed into the centre of the working space having the shape of a flat-cylinder, which cylinder is delimited by two, in the opposite direction rotating, coaxial, circular plates situated at a perpendicular distance from each other of 32 mm and diameter of 780 mm, between which plates the grains are subjected to at least two mechanical impulses caused by collision of the treated grains with working bodies, and this to the first mechanical impulse at the collision speed of the grain with the working body in the range 50 to 70 m.s⁻¹ and the second mechanical impulse at the collision speed of the grain with the working bodies in the range 80 to 120 m.s⁻¹. By this mechanical treatment a filler for building compositions and building products is produced from Example 1, which filler comprising thermoplastic grains, which thermoplastic is HDPE polyethylene, which grains are modified into the shape of spatial branch and stem, asymmetrical, self-similar fractals with the Hausdorf's fractal dimension values in the range of about 2.4 - 2.75 and the longest dimension in one direction at most 15 mm, which grains are suitable as filler into concrete, mortars, geopolymers, and other from them that increase tensile bending strength thereof, and also, due to the presence of the limestone grains, which are present in the PP grains, also as filler for asphalts and asphalt concretes.

### Example 17

50% by weight of an ABS thermoplastic in the form of isometric granules with an input size of 15 mm, 50% by weight of the PP crumb with an average grain size of 10 mm, containing 50% by weight of a limestone filler, is fed, together with air in an amount of 0.75 m³/1 kg of the input raw material, into the centre of the process space having the shape of a flat cylinder, delimited by two in the opposite directions rotating coaxial circular plates situated at a perpendicular distance from each other of 32 mm and a diameter of 780 mm, between which plates the grains are subjected to at least two mechanical impulses caused by collisions of the treated grains with the working bodies, and this to the first mechanical impulse at the speed of the collision of the grain with the working body in the range of 50 to 70 m.s⁻¹, and to the second mechanical impulse at the speed of the collision of the treated grains with the working bodies in the range of 80 - 120 m.s⁻¹. This mechanical treatment produces a finely ground, partially fiberized material with a rough grain surface, which material is suitable as filler in building compositions or for production of extruded products. This mechanical treatment produces a filler for building compositions and building products, comprising thermoplastic grains, which thermoplastics are ABS and PP filled with limestone, wherein, their grains are shaped into spatial, branch and stem, asymmetric, self-similar fractals with the Hausdorf s fractal dimension values in the range of about 2.4 - 2,75 and the longest dimension in one direction not more than 15 mm, which are suitable as a filler in concrete, mortars, geopolymers, and other building compositions, and products made of them, wherein, they increase their tensile bending strength and also, due to the presence of limestone grains in the PP grains, also for asphalts and asphalt- concretes.

### Example 18

25% by weight of ABS thermoplastic in the form of isometric granules with an input size of 15 mm, 25% by weight of isometric PP granules with an input size of 10 mm, 25% by weight of isometric LDPE granules with an input size of 7 mm, together with 20% by weight of crushed crystalline Dolomitic limestone of input grain size in the range 0 - 5mm and 5% by weight of talc crumb with an input grain size of 0 - 5mm, are brought together with air in the amount of 1.02 m³/1kg of the input raw material to the centre of the process space in the shape of a flat cylinder, delimited by two oppositely rotating coaxial circular plates situated at a perpendicular distance from each other of 32 mm and a diameter of 800 mm, between which plates the grains are subjected to at least four mechanical impulses caused by collision of the treated grains with the working bodies, and this to the first mechanical impulse at the collision speed of the grains with the working body in the range of 50 to 70 m.s⁻¹ and the second mechanical impulse at the collision speed of the treated grains with the working bodies of 70 - 90 m.s⁻¹, to the third mechanical impulse at the collision speed of 90 - 110 m.s⁻¹, and the fourth impulse at the collision speed of 100 - 130 m.s⁻¹. This mechanical treatment produces a filler comprising thermoplastic grains, which thermoplastics are ABS, PP and LDPE, whose grains are modified to the shape of spatial branch and stem, asymmetrical, self-similar fractals with the Hausdorf's fractal dimension values in the range of about 2.3 - 2.75 and the longest dimension in one direction at most 15 mm, which filler has a reduced tendency to the undesired agglomeration due to the presence of the dolomitic limestone and talc grains on the surface, that is also in the cracks crevices and branching of the grains of the fractal shape, and this filler is suitable as a filler in concrete, mortars, geopolymers, asphalts and asphalt concrete, and other building compositions, and products made of them, or for production of extruded products. This results in filler according to the invention, which exhibits properties of a hydrophobic binder, with fine limestone grains adhered to the surface of the grains of fractal nature made of thermoplastic materials. This filler is suitable for asphalts and asphalt concretes, in which it reduces the formation of potholes in the winter period. Further, it is suitable for production of extruded products.

### Example 19

100% by weight of grains of the sorted municipal waste fraction SRF/RDF in the form of chips with input grain size up to 35 mm, about 60% by weight of which are plastics from the group of thermoplastics, is brought together with air in the amount of 0.35 m³/1 kg of the input raw material to the centre of the processing space of the shape of a flat cylinder, delimited by two oppositely rotating coaxial circular plates situated at a perpendicular distance from each other of 32 mm and with diameter of 800 mm, between which plates the grains are subjected to at least three mechanical impulses caused by collision of the treated grains with working bodies, and this to the first mechanical impulse at the collision speed of the grains with the working body in the range of 50 to 80 m.s⁻¹, and a second mechanical impulse at the collision speed of the treated grains with the working bodies in the range of 85 - 100 m.s⁻¹, and a third pulse at the collision speed of the treated grains with the working bodies with a speed of 100 - 125 m.s⁻¹. This mechanical treatment produces a filler for building compositions and building products, especially concretes, comprising a composition of fractal grains of thermoplastics and cellulosic materials, wherein, these grains of fractal nature are modified into the shape of spatial branch and stem, asymmetric fractals with the Hausdorf's fractal dimension values in the range of about 2,3 - 2.85 and the longest dimension in one direction at most 15 mm, wherein, fine grains of inorganic substances present in the SRF/RDS, especially of glass and ceramics, are glued in the surface of the fractal shaped grains.

### Example 20

100% by weight of solid alternative fuel (TAP), commonly used for heating of the cement kilns, in the form of chips with an input grain size of up to 35 mm, about 75% of which are plastics from the group of thermoplastics, is supplied together with air in the amount of 0.45 m³/1 kg of input raw material to the centre of the processing space in the shape of a flat cylinder, delimited by two oppositely rotating coaxial circular plates situated at a perpendicular distance from each other of 32 mm and of a diameter of 800 mm, between which the grains are subjected to at least three mechanical impulses caused by collision of the treated grains with the working bodies, and this the first mechanical impulse at the collision speed of the grains with the working body in the range of 50 to 80 m.s⁻¹, and the second mechanical impulse at the collision speed of the treated grains with working bodies in the range of 85 - 100 m.s⁻¹, and the third impulse at the collision speed of the treated grains with working bodies at the speed 105 - 130 m.s¹. This mechanical treatment produces a finely ground material comprising a composition of thermoplastic grains and cellulosic materials, wherein, the grains of which are shaped into spatial branch and stem, asymmetrical, self-similar fractals with the Hausdorf's fractal dimension values in the range of about 2.3 - 2.85 and the longest dimension. in one direction not more than 15 mm, which is filler for building compositions and building products, especially concretes, comprising a composition of thermoplastic grains, cellulosic materials, the grains of which are shaped into spatial branch and stem, asymmetrical, self-similar fractals with the Hausdorf's fractal dimension values in the range of about 2.3 - 2.85 and the longest dimension in one direction not more than 15 mm, usable as a filler in building compositions and building elements, especially in concretes and asphalts, but also for production of extruded products.

### Example 21

70% by weight of recycled ABS thermoplastic material, in the form of crumb with input grain size up to 15 mm and 30% by weight of crystalline calcitic limestone with input grain size up to 5mm, is fed together with air in the amount of 1.4 m³/1 kg of input raw material to the centre of the processing space in the shape of a flat cylinder, delimited by two oppositely rotating coaxial circular plates situated at a perpendicular distance from each other of 32 mm and od diameter of 780 mm, between which the grains are subjected to at least three mechanical impulses caused by collision of the treated grains with the working bodies, i.e. the first mechanical impulse at the collision speed of the grains with the working body in the range of 50 to 80 m.s⁻¹ and a second mechanical impulse at the collision speed of the treated grains with working bodies at the speed in the range of 85 - 100 m.s⁻¹ and a third collision at the speed in the range of 105 - 135 m.s⁻¹. This treatment produces a filler of the fractal nature according to the invention with limestone grains adhered to the surface of the ABS grains and to the branching of their fractal grains.

### Example 22

80% by weight of grains of the sorted municipal waste material containing at least 40% by weight of thermoplastics with moisture content of 20% by weight, and grain sizes up to 35 mm, together with 20% by weight of a composition of inorganic substances, i.e. the artificial pozzolan, granulation ash, CaO and 2CaSO4.H2O in a weight ratio of 4:2:2:1 together with air in the amount of 1.25 m³/1 kg of the feedstock are lead to the centre of the processing space in the shape of a flat cylinder, delimited by two oppositely rotating coaxial circular plates situated at a perpendicular distance from each other of 32 mm and with diameter of 780 mm, between which the grains are subjected to at least three mechanical impulses caused by collision of the treated grains with the working bodies, and this the first mechanical impulse at the collision speed of grains with working body in the range of 50 to 80 m.s⁻¹, and the second mechanical impulse at the collision speed of the treated grains with the working bodies at the speed in the range of 85 - 100 m.s⁻¹, and the third collision with speed in the range of 105 - 135 m.s⁻¹. This treatment produces an active filler of the fractal nature according to the invention with grains of inorganic substances adhered to the surface and to the branching of the fractal grains. The composition treated in this way is suitable e.g. as a dry building composition suitable e.g. production of the vibro-pressed building elements.

### Example 23

76% by weight of solid alternative fuel TAP (RDF) in the form of chips, with a moisture content of 15% by weight. and grain sizes up to 35 mm, together with 24% of the weight of crushed Portland clinker with an input grain size of 0 - 6 mm, together with air in the amount of 1.48 m³/1 kg by weight of the feedstock, are brought to the centre of the processing space in the shape of a flat cylinder, delimited by two oppositely rotating coaxial circular plates situated at a perpendicular distance from each other of 32 mm and having diameter of 800 mm, between which the grains are subjected to at least four mechanical impulses caused by collision of the treated grains with the working bodies, and this the first mechanical pulse at the collision speed of the grains with the working body in the range of 50 to 70 m.s⁻¹, and the second mechanical impulse at the collision speed of the treated grains with working bodies at the speed in the range of 70 - 90 m.s⁻¹, and the third collision at the speed in the range of 90 - 100 m.s⁻¹, and the fourth collision at the speed of 100 - 125 m.s⁻¹. This treatment produces active filler according to the invention with Portland clinker grains adhered to the surface of the fractals, into the cracks and into the branching of the fractal grains of the thermoplastic and cellulosic substances present in the TAP (RDF). The composition treated in this way is suitable as active filler, for example in production of the vibro-pressed building elements.

### Example 24

99.5% by weight of solid alternative fuel TAP (RDF) in the form of chips, with a moisture content of 15% by weight and grain sizes up to 35 mm, together with 0.5% by weight of aluminium powder with an input grain size of 0 - 100µm, together with air in the amount of 0.72 m³/1 kg of weight of the feedstock, are brought to the centre of the processing space in the shape a flat cylinder delimited by two oppositely rotating coaxial circular plates situated at a perpendicular distance from each other of 32 mm and with a diameter of 780 mm, between which the grains are subjected to at least three mechanical impulses caused by collisions of the treated grains with the working bodies, and this to the first mechanical impulse at the collision speed of the grains with the working body in the range of 50 to 80 m.s⁻¹ and a second mechanical impulse at a collision speed of the treated grains with the working bodies in the range of 85 - 100 m.s⁻¹, and a third collision at a speed in the range of 105 - 135 m.s⁻¹. This treatment produces active filler according to the invention with aluminium grains adhering to the surface of the fractal grains. The composition treated in this way is suitable as an active filler of production of the gas-concrete building elements.

### Example 25

75% by weight of the solid alternative fuel TAP (RDF) in the form of chips, with a moisture content of 15% by weight and grain sizes up to 35 mm, together with 24.5% by weight of Portland cement 42.5 R of the input grain size 0 - 70µm and 0.5% by weight of aluminium powder of the input grain size 0 - 100 µm, together with air in the amount 1.05 m³/1 kg by weight of the feedstock, are fed to the centre of the processing space in the shape of a flat cylinder delimited by two oppositely rotating coaxial circular plates situated at a perpendicular distance from each other of 32 mm and of a diameter of 800 mm, between which the grains are subjected to at least four mechanical impulses caused by collision of the treated grains with the working bodies, and this to the first mechanical impulse at the collision speed of grains with working body in the range of 50 to 70 m.s⁻¹ and the second mechanical impulse at the collision speed of the treated grains with the working bodies at the speed in the range of 70 - 90 m.s⁻¹, and a third collision at the speed in the range of 90 - 100 m.s⁻¹, and a fourth collision at a speed of 100 - 125 m.s⁻¹. This treatment produces active filler according to the invention with the Portland clinker grains adhered to the surface of the fractal grains of the thermoplastic and cellulosic substances present in TAP (RDF). The composition treated in this way is suitable as an active filler, e.g. for production of the gas-concrete products.

### Example 26

76% by weight of grains of the sorted municipal waste material containing at least 50% by weight of thermoplastics with a moisture content of 20% by weight and grain sizes up to 35 mm, together with 24% by weight of dry quarry dust from the basalt crushing, together with air in the amount of 1.45 m³/1 kg of the feedstock, are brought to the centre of the processing space in the shape of a flat cylinder delimited by two oppositely rotating coaxial circular plates situated at a perpendicular distance from each other of 32 mm and with diameter of 800 mm, between which the grains are subjected to at least three mechanical impulses caused by collision of the treated grains with the working bodies, and this to the first mechanical impulse at the collision speed of the grains with the working body in the range 50 - 80 m.s⁻¹, and the second mechanical impulse at the collision speed of the treated grains with the working bodies at the speed in the range 85 - 100 m.s⁻¹, and the third collision at the speed in the range 105 - 135 m.s⁻¹, wherein, between the second and the third mechanical impulses dynamical compression of the composition of treated substances with air up to 58% of the original volume of the composition takes place, because the working bodies, giving the second impulse to the grains of the treated substance, are simultaneously designed as accelerating compressor vanes, and the bodies imparting a third impulse to the grains of the treated substance are simultaneously designed as braking compressor vanes. These bodies are arranged in circular rows of unequal diameter, with the centre in the centre of rotation of the rotors, wherein each is on one of the contra rotating rotors. Between these rows, the composition of grains of the treated substances with air is dynamically compressed. This treatment produces an active filler according to the invention with grains of inorganic substances adhered to the surface and to the branching of the fractal grains. The composition treated in this way is suitable as a dry building composition suitable, for example, for production of vibro-pressed building elements.

The above described examples of embodiments are intended only as possible examples and they do not limit the scope of the invention only to the embodiments so described.

## Claims

1. A filler for building compositions and building products, **characterized in that** the filler comprises grains of at least one thermoplastic, shaped into the form of fractals of branch and/or stem nature, and/or combinations thereof, wherein, the size of the fractals of the branch and/or the stem nature in one dimension at most 15 mm.

2. The filler for building compositions and building products according to Claim 1, **characterized in that** it comprises from 15% by weight. to 85% by weight, based on the total weight of the filler, of grains of at least one thermoplastic modified into the shape of fractals of the branch and/or stem nature, and wherein the remainder, based on the total weight of the filler, consists of grains of at least one cellulose and/or lignocellulose substance modified into the shape of fractals of the branch and/or stem nature.

3. The filler for building compositions and building products according to Claims 1 and 2, **characterized in that** the grains in the shape of fractals are arranged at least partially in clusters.

4. The filler for building compositions and building products according to any one of Claims 1 to 3, **characterized in that** particles with the size of up to 300 µm of at least one substance selected from the group comprising solid inorganic substance from the group of water-insoluble oxides, silicates, aluminosilicates, carbonates, phosphates, and/or compositions thereof are thermo-mechanically integrated in the surface of grains in the shape of fractals of the branch and/or stem nature, and/or their combinations.

5. The filler for building compositions and building products according to any one of claims 1 to 3, **characterized in that** particles with the size in the range from 10 µm to 100 µm of at least one solid inorganic substance from the group comprising: hydraulic substances, latent hydraulic substances, silicates, aluminosilicates, oxides, hydroxides, carbonates, aluminates, phosphates and sulphates of Ca, Mg, Na, K, and Fe and compositions thereof, for creation of active filler are thermo-mechanically integrated in the surface of grains in the shape of fractals of the branch and/or stem nature, and/or their combinations.

6. The filler for building compositions and building products, **characterized in that** aluminium grains of the size up to 150 µm in an amount of from 0.05% to 0.25% by weight, based on the weight of filler are thermo-mechanically introduced into the surface of grains in the form of fractals of the branch and/or stem nature and/or of their combinations to form a composition for preparation of the gas-concrete reinforced with the fractal filler.

7. Filler for building compositions and building products according to any one of claims 1 to 6, **characterized in that** the grain size in the form of spatial fractals of the branch and/or stem shape, and/or combinations thereof is in one dimension at most 5 mm.

8. Method of production of a filler for building compositions and building products, **characterized in that** grains of at least one thermoplastic with an input size of up to 35 mm are mixed with air in an amount in the range from 0.1 m³ to 1.5 m³ per 1 kg of the treated grains, the grains are than subjected to at least two successive collisions with a working body moving at a speed of at least 80 m.s⁻¹ for their heating and partial melting and simultaneously they are brought into turbulent flow for their disconnection and formation of grains in the shape of fractals of the branch and/or stem-shape.

9. Method of production of fillers for building compositions and building products according to Claim 8, **characterized in that** grains of solid alternative fuel prepared from sorted municipal waste of the SRF/RDF fraction containing at least 50% by weight of thermoplastics with grain size up to 35 mm are used as thermoplastic grains.

10. Method of production of fillers for building compositions and building products according to Claims 8 and 9, **characterized in that** grains of at least one inorganic substance selected from the group comprising the solid inorganic substances from the group of water-insoluble oxides, silicates, aluminosilicates, carbonates, phosphates and/or compositions thereof are added to the grains of at least one thermoplastic and/or cellulosic and/or lignocellulosic substance and/or of sorted out municipal waste of the SRF/RDF fraction.

11. Method of production of fillers for building compositions and building products according to claims 8 and 9, **characterized in that** grains of at least one inorganic substance selected from the group comprising hydraulic substances, latently hydraulic substances, oxides, hydroxides and sulphates of Ca and Fe, and compositions thereof, are added to the grains of at least one thermoplastic, in mutual ratio of weights, and/or cellulosic and/or lignocellulosic substances and/or of sorted out municipal waste of the SRF/RDF fraction to the inorganic substance from 1:6 to 6:1, and they are mixed with air before their collision with the working body in the amount from 0.3 m³ to 1.2 m³ of air per 1 kg of composition of the treated grains.

12. Method of production of fillers for building compositions and building products according to any one of claims 8 to 11, **characterized in that** additives and/or dyes in solid or liquid state are added to the grains before they collide with the working body.

13. Method of production of fillers for building compositions and building products according to any one of claims 8 to 12, **characterized in that** aluminium with a grain size of at most 0.25 mm in an amount of 0.05% - 0.25% based on the weight of the composition is added to the grains before they collide with the working body,.

14. Method of production of a filler for building compositions and building products according to claim 9 or 11, **characterized in that** during the treatment the composition is compressed to at least 60% of the original volume to increase the heating of the grains in the composition and make its collisions with the working bodies more efficient.
